# EUROPEAN PATENT SPECIFICATION

(11) **EP 3 294 207 B1**
(45) Date of publication and mention of the grant of the patent: **11.12.2019**
(21) Application number: 16793108.8
(22) Date of filing: 10.03.2016
(51) Int. Cl.: A61F 2/00, B01D 63/14, B01D 69/10

(54) **FILM BONDED FLATPACK**
DURCH FILM VERBUNDENES FLACHGEHÄUSE
BOÎTIER PLAT À FILM COLLÉ

(30) Priority: 08.05.2015 US 201562158606 P
(43) Date of publication of application: 21.03.2018
(73) Proprietor: EMD Millipore Corporation, Burlington, MA 01803 (US)
(72) Inventor: ALMASIAN, Joseph M., Billerica, Massachusetts 01821 (US); CHISHOLM, Mark E., Billerica, Massachusetts 01821 (US); GAGNE, George A., Jr., Billerica, Massachusetts 01821 (US); SZYK, Martin, Billerica, Massachusetts 01821 (US)
(74) Representative: Uexküll & Stolberg
(86) International application number: PCT/US2016/021698
(87) International publication number: WO 2016/182624

(56) References cited:
- EP-A1- 2 500 084
- WO-A1-2012/084960
- WO-A1-2014/047016
- US-A- 5 009 968
- US-A1- 2010 282 663
- US-A1- 2010 314 323
- US-B1- 6 273 938
- US-B2- 6 986 428

## Description

This application claims priority of U.S. Provisional Application Serial No. 62/158,606 filed May 8, 2015.

### BACKGROUND

The embodiments disclosed herein relate to membrane-based separations devices.

It is known that biopharmaceutical liquids are in general obtained by culture in a bioreactor and that they must then be treated to achieve the required characteristics of purity, concentration, absence of viruses, etc. Purification can be carried out using a succession of treatments such as clarification, to eliminate the residues from the bioreactor culture, and viral filtration sometimes followed by diafiltration and concentration by tangential flow filtration. Other operations exist concerning purification, such as chromatography. The purification treatments are essentially carried out by filtering operations in a circuit or process train.

Most pleated cartridge filters are limited in area due to the physical constraints of the cartridge or housing itself. Some cartridges may provide more or less area based on the number of membrane pleats, pleat height, and support thickness. Also, the cartridge sleeve has a fixed diameter, which cannot be easily modified, as larger sleeves require the creation of a new part. These cartridges typically require a plastic or a stainless steel housing to manage working pressures.

In addition, the necessity of pleating the membranes within cartridges limits the membranes that can be used due to limitations in mechanical properties (for example, certain membranes cannot be folded or pleated, since they are susceptible to cracking or forming defects that would be deleterious to the filtration process).

It would be desirable to improve the flexibility of membrane-based separations devices that conventionally required such housings by creating a design that can be sized easily for high or low filter areas without requiring the modification of tooling or equipment.

It would also be desirable to provide membrane-based separations devices that achieve a high membrane density per unit area in a flat or planar format, thereby avoiding folding or pleating of the membrane material.

Embodiments disclosed herein relate to a flat pack membrane-based assembly enabling the simple, economical and convenient implementation of treatments for biological fluids, for example.

EP 2 500 084 A1 discloses a separation membrane unit comprising two separation membranes sandwiching a channel member. The separation membrane unit is provided as a sheet folded into a zig-zag configuration.

US 2010/0282663 A1 discloses a filtration cartridge formed of stacked plates.

### SUMMARY

The present invention is directed to a single-use membrane-based separations device and is defined in claim 1. Advantageous versions of the invention follow from the dependent claims.

In certain embodiments, the membrane-based separation device disclosed herein comprises multiple interconnected flat sheets of membrane bonded to a flexible film. The bonded films are bonded in a way to create an accordion or zig-zag shape. No folds are present in the membrane. The accordion or zig-zag shape allows for parallel flow, rather than flow in series that occurs with stacked assemblies. The number and size of each bonded film can vary. In certain embodiments, the first or upstream layer or segment is sealed to a suitable housing, and the last or most downstream layer or segment is also affixed to the suitable housing. The housing may contain an inlet port for the introduction of sample, and a spaced outlet port for the removal of filtered sample. The housing may be comprised of film material consistent with the filtration device itself and could be a film or significantly rigid material which could also serve to manage working pressure of the device.

Suitable applications for the device include clarification, prefiltration, sterile filtration, virus filtration, bio-burden reduction, concentration and diafiltration of biological fluids, including Mammalian, bacterial and mycelial cell suspensions, emulsions and colloidal suspensions, viruses, proteins and other bio-organic macromolecular solutions, polysaccharides and other high viscosity solutions, yeast, algae, and other high solids suspensions, and protein precipitates.

Since the membranes are not folded or pleated, higher performance (i.e., capacity + flow) membranes, such as polysulfone-based membranes with some degree of asymmetry, than those usable in pleated or folded systems, can be used. The device is a single-use, disposable device.

### BRIEF DESCRIPTION OF THE DRAWINGS

FIG. 1 is a cross-sectional view of a membrane-based separations device in accordance with certain embodiments;
FIG. 2 is a cross-sectional view of the device of FIG. 1 shown within a pressure management assembly during operation of the device, in accordance with certain embodiments; and
FIG. 3 is a schematic diagram of a tangential flow filtration application in accordance with certain embodiments.

### DETAILED DESCRIPTION

In accordance with certain embodiments, provided herewith is a flexible membrane-based separations device that utilizes an accordion or zig-zag configuration comprised of multiple segments or layers that are joined together. This configuration allows for parallel flow of fluid sample, in contrast to the in series flow typical of stacked separation devices. Device could be configured in such a way to achieve both parallel and serial flow within a single device.

In certain embodiments, the device is unitary, integral, and disposable (i.e., is a single-use device). In certain embodiments, the device is flat or planar, or substantially so. In certain embodiments, the device can be used for normal flow filtration. In certain embodiments, the device can be used for tangential flow filtration.

Rather that utilizing membrane support plates (typically plastic injection molded), embodiments disclosed herein utilize a thin film (in conjunction with non-woven material or screen material) to support the membranes in the device. This configuration can help achieve higher area and lower cost. Suitable thin films include polymeric films such as polysulfone film and polyolefin films, including polyethylene and polypropylene film. Preferably the film is sealable or weldable to the membrane and to itself, and is fluid impervious. Suitable mechanisms for sealing include the use of a suitable sealing agent such an epoxy; heat sealing; or chemical bonding. Slots or other apertures may be formed in the film in the region of the membrane to allow fluid flow, or the film may form a "picture frame" relative to the membrane to allow flow to pass through under the membrane.

Suitable membranes include macroporous or microporous polymeric membranes, ultrafiltration membranes and hydrophilic or hydrophobic membranes. Suitable membrane materials include polyethersulfone, nylon, nitrocellulose, cellulose esters, regenerated cellulose, polycarbonate, polyethylene, polypropylene, etc. The membrane material should be sealable to the thin film supporting it.

In certain embodiments, each segment or layer of the multilayer device includes a fluid impervious polymeric film, and a filtration or adsorbtive membrane sealed to the film such that the membrane is exposed on both major surfaces of the film to provide available filtration area for filtration of the fluid sample introduced into the device. In certain embodiments, each segment or layer has spaced apart first and second longitudinal end edges. In certain embodiments, a first one of these segments or layers is then coupled, preferably at or near one longitudinal end edge thereof, to a second one of these segments, also at or near one longitudinal end edge thereof. The second segment or layer may be also coupled, at or near the opposite longitudinal end edge thereof, to a third segment or layer, also at or near one longitudinal end edge thereof, and so on. The polymeric film of each layer provides a fluid barrier, thereby forcing fluid to pass through the membrane sealed to that layer. The segments or layers can be coupled, joined or attached by any suitable means, such as heat welding.

In certain embodiments, the device includes a housing containing a first fluid impervious polymeric film segment having a first membrane sealed thereto, the first fluid impervious polymeric film having a first leading edge and a first trailing edge; and a second fluid impervious polymeric film segment having a second membrane sealed thereto, the second fluid impervious polymeric film having a second leading edge and a second trailing edge. In certain embodiments, the first trailing edge of the first fluid impervious polymeric film segment is joined to the second leading edge of the second fluid impervious polymeric film segment, such as by welding. The first and second fluid impervious polymeric film segments form a zig-zag configuration, and as a result, fluid introduced into the housing flows through the first and second membranes in parallel. The device can include additional fluid impervious polymeric film segments with membrane sealed thereto, each additional segment being joined to an upstream segment to continue the zig-zag pattern (more segments means more filtration area and more processing volume).

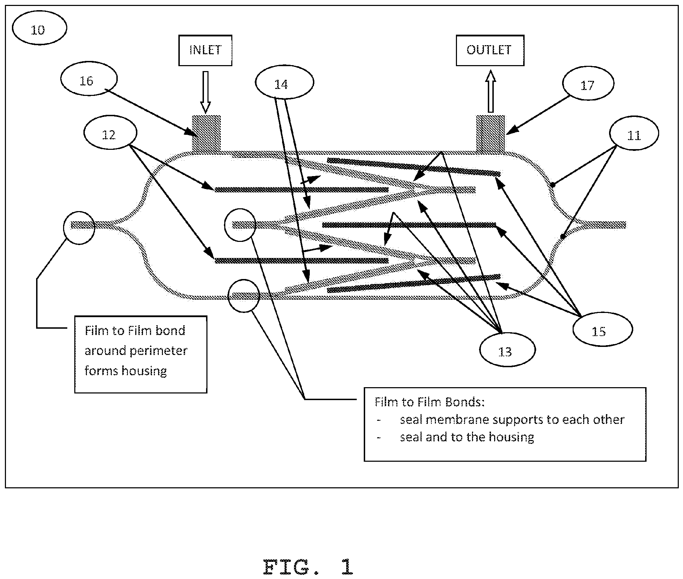

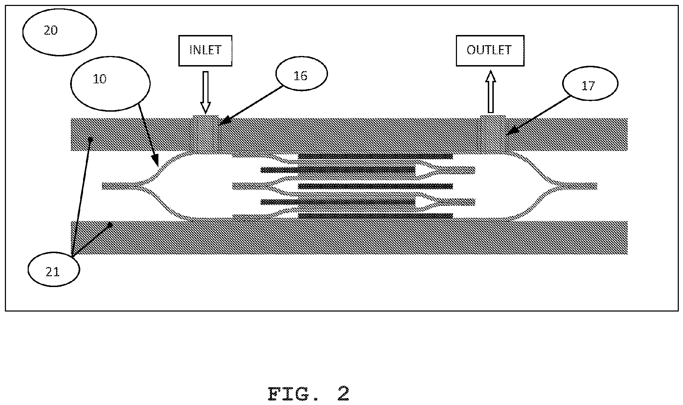

Turning now to FIG. 1, there is shown a cross-sectional view of a membrane-based separation device 10 in accordance with certain embodiments. In the embodiment shown, the device 10 includes a suitable outer housing or outer shell 11 having a sample inlet port 16 and a sample outlet port 17, the location of which in the housing is not particularly limited. The configuration of the inlet and outlet are not particularly limited, and can include tubes, hosebarbs, sanitary flanges such as Tri Clover fittings, etc. Suitable housing materials of construction include materials compatible with film which would allow them to be sealed/bonded to the film, such as polysulfone, polyethylene, polypropylene, etc., and should be capable of managing low pressures (e.g. 0-1psi) to test the integrity of the weld/bonds when unrestrained. In certain embodiments, the outer layer or housing 11 is constructed of the same material as the film, and may be formed of two films sealed by film-to-film bonds as shown. Inlet, outlet, and vent fittings may be bonded or sealed to the housing 11. In addition, there also may be a secondary shell/housing which is in intimate contact with outer film layer (housing) used to manage operating pressure. In certain embodiments, the housing 11 material is chosen so that it is bondable to the polymeric thin film membrane support material. The pressure managing housing 21 (FIG. 2) can be integral to the membrane packet (e.g., bonded to it due to similar materials being used) or it can be stand-alone (dissimilar material and reusable). Since housing 21 does not contact the sample, it need not be a gamma stable material.

Shown inside the housing 11 are a plurality of layers or segments 13, each comprising a membrane film support and a membrane 14 sealed thereto. The number of layers or segments is not particularly limited; any number of layers or segments can be used depending upon, for example, the size of the housing and the desired extent of filtration. As can be seen in FIG. 1, each successive segment 13 is attached to the next segment 13 at each respective longitudinal end edge thereof, such as by film-to-film bonds to seal the membrane supports 13 to each other in a zig-zag pattern. In certain embodiments, the leading longitudinal end edge of the uppermost segment 13 is sealingly attached to the inner housing wall 11, as is the trailing edge of longitudinal end edge of the lowermost segment 13, both by film-to-film bonds.

In accordance with certain embodiments, flow through the membrane-based separations device 10 is in parallel to two adjacent segments or layers. In the embodiment shown, there are four segments or layers, although those skilled in the art will appreciate that fewer or more could be provided. Fluid sample introduced into the inlet port 16 flows through the available membrane area of the upstream side of the membrane 14 in the first segment or layer 13, and also through available membrane area of the up side of the membrane 14 in the second segment or layer 13. Similarly, fluid sample introduced into the inlet port 16 flows through the available membrane area of up side of the membrane 14 in the third segment or layer 13, and also through available membrane area of the up side of the membrane in the fourth segment or layer 13. Filtered fluid from each of the segments or layers proceeds to the outlet port 17 of the device 10.

In accordance with certain embodiments, additional support for the membranes in each segment or layer can be provided, such as with a fluid permeable mesh or grid 15 (such as nonwoven or woven polymeric material) positioned on the downstream side of the membrane. Such a membrane support allows increased operating pressures, for example up to about 50-60 psi. The mesh or grid 15 may also assist in carrying the fluid flow away from the membrane and towards the outlet port 17 of the device. The open area of the grid or mesh 15 should be chosen so as not to choke the flow. Suitable materials for the support grid include wovens such as polyester, polyethersulfone (PES), polypropylene, nylon; and nonwovens such as polyester, polyethersulfone (PES), polypropylene, nylon and polyethylene. In embodiments where the device is used as a pre-filter, a grid with a relatively large open area can be used so as to not choke flow.

In certain embodiments, an upstream flow channel support 12 may be used to help keep the upstream side of the membrane 14 accessible to inlet fluid during operation.

In certain embodiments, the membrane-based separations device is sterilized by suitable means such as gamma radiation.

In certain embodiments, rather than bonding multiple layers or segments together, a single sheet could be used, and folded at spaced locations to form the accordion or zig-zag configuration.

In certain embodiments, the flat pack filter device may be used with a pressure management assembly as shown in FIG. 2. Thus, the assembly 20 includes the filter device 10, with top and bottom rigid pressure management endplates 21 confining the device 10. An inlet port 16 and an outlet port 17 may be formed in one of the endplates 21 as shown, or one port may be formed in each of the endplates 21. During operation, the endplates 21 limit the extent to which the device 10 expands due to operating pressures.

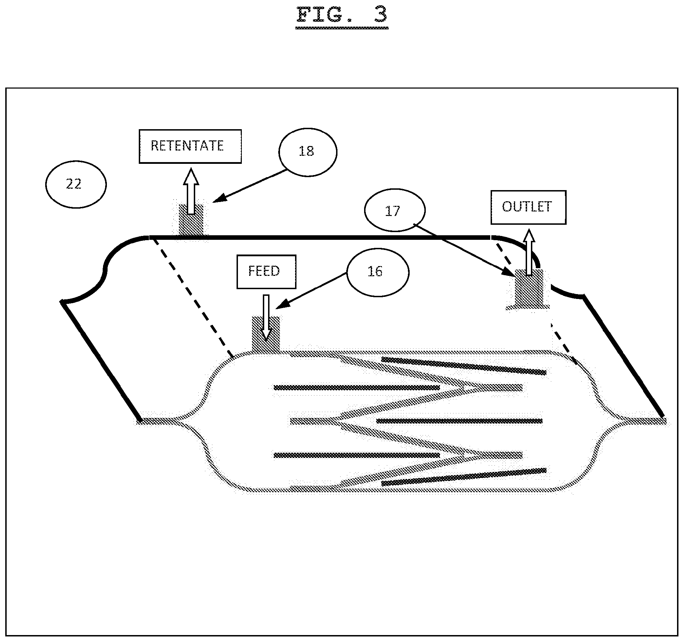

An example of a tangential flow filtration application is shown in FIG. 3. Tangential flow filtration (TFF) or cross-flow filtration involves feeding product tangentially along the surface of the membrane, which helps reduce product concentration at the membrane surface and minimize pore blockage. The flat pack filter device is placed in a housing 22 as shown. Feed is fed into inlet port 16 and upon the application of a driving force, such as applied pressure, retentate exits through port 18.

## Claims

1. A single-use membrane-based separations device, comprising a first fluid impervious polymeric film segment (13) having apertures and having a first membrane (14) sealed thereto, said first fluid impervious polymeric film having a first leading edge and a first trailing edge; and a second fluid impervious polymeric film segment (13) having apertures and having a second membrane (14) sealed thereto, said second fluid impervious polymeric film having a second leading edge and a second trailing edge; wherein said first and second fluid impervious polymeric film segments (13) form a zig-zag configuration, and wherein fluid introduced into said device (10) flows through said first and second membranes (14) in parallel; **characterized in that** said first trailing edge of said first fluid impervious polymeric film segment (13) is joined to said second leading edge of said second fluid impervious polymeric film segment (13) by epoxy, heat sealing or chemical bonding.

2. The membrane-based separations device of claim 1, further comprising a third fluid impervious polymeric film segment (13) having a third membrane (14) sealed thereto, said third fluid impervious polymeric segment having a third leading edge and a third trailing edge, wherein said second trailing edge of said second fluid impervious polymeric film segment (13) is joined to said third leading edge of said third fluid impervious polymeric film segment (13) .

3. The membrane-based separations device of claim 1, further comprising a housing (11) containing said first and second fluid impervious polymeric film segments (13), and wherein said first leading edge of said first fluid impervious polymeric film segment (13) is joined to said housing (11) .

4. The membrane-based separations device of claim 1, further comprising a housing (11) containing said first and second fluid impervious polymeric film segments (13), and wherein said second trailing edge of said second fluid impervious polymeric film segment (13) is joined to said housing (11).

5. The membrane-based separations device of claim 1, further comprising a pressure management assembly comprising first and second endplates (21) confining said device (10).

6. The membrane-based separations device of claim 1, further comprising a housing (11) containing said plurality of segments (13); said housing (11) having a feed port and a retentate port spaced from said feed port.

## Patentansprüche

1. Einweg-Separationsvorrichtung auf Membranbasis, mit einem ersten fluidundurchlässigen polymeren Filmsegment (13), das Öffnungen hat und eine daran gesiegelte erste Membran (14) hat, wobei der erste fluidundurchlässige polymere Film einen ersten führenden Rand und einen ersten nachlaufenden Rand hat; und einem zweiten fluidundurchlässigen polymeren Filmsegment (13), das Öffnungen hat und eine zweite daran gesiegelte Membran (14) hat, wobei der zweite fluidundurchlässige polymere Film einen zweiten führenden Rand und einen zweiten nachlaufenden Rand hat; wobei die ersten und zweiten fluidundurchlässigen polymeren Filmsegmente (13) eine Zick-Zack-Konfiguration bilden, und wobei in die Vorrichtung (10) eingeführtes Fluid parallel durch die ersten und zweiten Membranen (14) strömt; **dadurch gekennzeichnet, dass** der erste nachlaufende Rand des ersten fluidundurchlässigen polymeren Filmsegments (13) durch Epoxidharz, Heißsiegeln oder chemisches Kleben mit dem zweiten führenden Rand des zweiten fluidundurchlässigen polymeren Filmsegments (13) verbunden ist.

2. Separationsvorrichtung auf Membranbasis nach Anspruch 1, die ferner ein drittes fluidundurchlässiges polymeres Filmsegment (13) mit einer daran gesiegelten dritten Membran (14) aufweist, wobei das dritte fluidundurchlässige polymere Segment einen dritten führenden Rand und einen dritten nachlaufenden Rand hat, wobei der zweite nachlaufende Rand des zweiten fluidundurchlässigen polymeren Filmsegments (13) mit dem dritten führenden Rand des dritten fluidundurchlässigen polymeren Filmsegments (13) verbunden ist.

3. Separationsvorrichtung auf Membranbasis nach Anspruch 1, die ferner ein Gehäuse (11) aufweist, das die ersten und zweiten fluidundurchlässigen polymeren Filmsegmente (13) enthält, und wobei der erste führende Rand des ersten fluidundurchlässigen polymeren Filmsegments (13) mit dem Gehäuse (11) verbunden ist.

4. Separationsvorrichtung auf Membranbasis nach Anspruch 1, die ferner ein Gehäuse (11) aufweist, das die ersten und zweiten fluidundurchlässigen polymeren Filmsegmente (13) enthält, und wobei der zweite nachlaufende Rand des zweiten fluidundurchlässigen polymeren Filmsegments (13) mit dem Gehäuse (11) verbunden ist.

5. Separationsvorrichtung auf Membranbasis nach Anspruch 1, die ferner eine Druckmanagementanordnung mit ersten und zweiten Endplatten (21) aufweist, die die Vorrichtung (10) begrenzen.

6. Separationsvorrichtung auf Membranbasis nach Anspruch 1, die ferner eine Gehäuse (11) aufweist, das die Anzahl der Segmente (13) enthält; wobei das Gehäuse (11) einen Zuführanschluss und einen Retentatanschluss hat, der von dem Zuführanschluss beabstandet ist.

## Revendications

1. Dispositif de séparation à usage unique basé sur une membrane, comprenant un premier segment de film polymère imperméable aux fluides (13) comportant des ouvertures et sur lequel est soudée une première membrane (14), ledit premier film polymère imperméable aux fluides ayant un premier bord avant et un premier bord arrière ; et un deuxième segment de film polymère imperméable aux fluides (13) comportant des ouvertures et sur lequel est soudée une deuxième membrane (14), ledit deuxième film polymère imperméable aux fluides ayant un deuxième bord avant et un deuxième bord arrière ; dans lequel lesdits premier et deuxième segments de film polymère imperméable aux fluides (13) forment une configuration en zigzag, et dans lequel un fluide introduit dans ledit dispositif (10) s'écoule à travers lesdites première et deuxième membranes (14) en parallèle ; **caractérisé en ce que** ledit premier bord arrière dudit premier segment de film polymère imperméable aux fluides (13) est lié audit deuxième bord avant dudit deuxième segment de film polymère imperméable aux fluides (13) par un élément époxy, par thermoscellage ou par collage chimique.

2. Dispositif de séparation basé sur une membrane selon la revendication 1, comprenant en outre un troisième segment de film polymère imperméable aux fluides (13) sur lequel est soudée une troisième membrane (14), ledit troisième segment polymère imperméable aux fluides ayant un troisième bord avant et un troisième bord arrière, dans lequel ledit deuxième bord arrière dudit deuxième segment de film polymère imperméable aux fluides (13) est lié audit troisième bord avant dudit troisième segment de film polymère imperméable aux fluides (13).

3. Dispositif de séparation basé sur une membrane selon la revendication 1, comprenant en outre un boîtier (11) contenant lesdits premier et deuxième segments de film polymère imperméable aux fluides (13), et dans lequel ledit premier bord avant dudit premier segment de film polymère imperméable aux fluides (13) est lié audit boîtier (11).

4. Dispositif de séparation basé sur une membrane selon la revendication 1, comprenant en outre un boîtier (11) contenant lesdits premier et deuxième segments de film polymère imperméable aux fluides (13), et dans lequel ledit deuxième bord avant dudit deuxième segment de film polymère imperméable aux fluides (13) est lié audit boîtier (11).

5. Dispositif de séparation basé sur une membrane selon la revendication 1, comprenant en outre un ensemble de gestion de pression comprenant des première et deuxième plaques d'extrémité (21) qui confinent ledit dispositif (10).

6. Dispositif de séparation basé sur une membrane selon la revendication 1, comprenant en outre un boîtier (11) contenant ladite pluralité de segments (13) ; ledit boîtier (11) comportant un orifice d'entrée et un orifice de rétentat espacé dudit orifice d'entrée.
